Europäisches Patentamt

European Patent Office

Office européen des brevets

(11) Publication number : **0 493 110 A2**

(12) **EUROPEAN PATENT APPLICATION**

(21) Application number : **91312011.9**

(22) Date of filing : **24.12.91**

(51) Int. Cl.$^5$ : **B29C 67/20,** C08J 9/00, H01B 3/00, // B29K23:00

(30) Priority : **26.12.90 JP 406865/90**
**11.11.91 JP 294257/90**

(43) Date of publication of application :
**01.07.92 Bulletin 92/27**

(84) Designated Contracting States :
**DE FR GB IT**

(71) Applicant : **THE FURUKAWA ELECTRIC CO., LTD.**
**6-1, 2-chome, Marunouchi Chiyoda-ku Tokyo (JP)**

(72) Inventor : **Sakamoto. Kazuhide**
**4-2-78, Room No. 503, Nishikasai Edogawa-ku, Tokyo 134 (JP)**
Inventor : **Sugimura, Masanobu**
**3-25-252, Room No. 305, Tatsumidai-higashi Ichihara-shi, Chiba 290 (JP)**

(74) Representative : **Holmes, Michael John Frank B. Dehn & Co. Imperial House 15-19 Kingsway London WC2B 6UZ (GB)**

(54) **Method of producing foamed polyolefin shaped body and method of producing foam-insulated electric cable having the shapedbody as foam insulating layer.**

(57) In foam-extruding a polyolefin resin, a foaming agent is employed, which is a mixture liquid of at least two kinds of compounds selected from the group consisting of ether, ester, ketone and saturated hydrocarbon having boiling points of 100°C or below, or a mixture liquid of at least one kind of compound selected from the group consisting of ether, ester, ketone and saturated hydrocarbon having boiling points of 100°C or below and at least one kind of liquid compound selected from the group consisting of ether, ester, ketone, saturated hydrocarbon and alcohol having boiling points of 100 to 150°C. Thus, a foamed polyolefin shaped body having a high void content and a low deformation ratio is produced. A foam-insulated electric cable having an insulating layer of the shaped body is produced.

Since the shaped body has a high void content and a low deformation ratio, the shaped body, if reduced in diameter, is hardly collapsed. Since the foaming agent is a liquid, it can be supplied in an exact amount. The obtained cable is useful as a foam-insulated cable applied to a high-speed signal transmission cable, an under-carpet cable, etc.

EP 0 493 110 A2

## BACKGROUND OF THE INVENTION

Field of the Invention

The present invention relates to a method of producing a foamed polyolefin shaped body in a pollution-free manner, which shaped body has a high void content and a high toughness, and to a method of producing a foam-insulated electric cable having the foamed polyolefin shaped body as an insulating layer.

Description of the Prior Art

For example, as a cable for interconnecting computers, a foam-insulated electric cable has widely been employed, wherein the outer periphery of a conductor is coated with a foam insulating layer of, for example, a polyolefin resin, thereby increasing a velosity of propagation(vop) as much as possible.

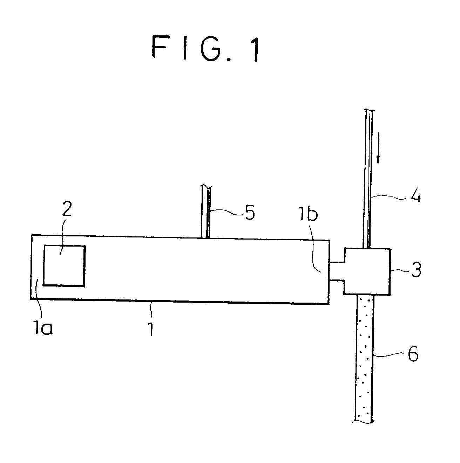

An example of this method of producing a foam-insulated cable will now be described with reference to Fig. 1.

A screw extruder 1 has a rear end portion 1a provided with a resin inlet 2, and an extrusion port 1b provided with a crosshead portion 3 having a die. A polyolefin resin such as polyethylene is supplied into the resin inlet 2 of the screw extruder 1. The die is held within the crosshead portion 3 so that the axis of the die intersects at right angles with the axis of the screw extruder. A conductor 4 is continuously guided into the die in the direction of the arrow.

The temperature of the screw extruder 1 is controlled at a predeterminded value. The resin supplied into the resin inlet 2 is conveyed to the extrusion port 1b, as being melted and kneaded by the screw of the extruder 1. At this time, a predetermined amount of a foaming agent is supplied into a foaming agent inlet formed between the resin inlet 2 and the extrusion port 1b.

The supplied resin and supplied foaming agent are melted and kneaded in the extruder 1 into a molten mixture which is about to foam. The mixture is supplied from the extrusion port 1b to the crosshead portion 3. Then, the mixture is extruded from the die held in the crosshead portion 3. The molten mixture coats the outer periphery of the conductor 4, which continuously runs through the die in the direction of arrow, and is foamed into a foam-insulating layer.

In this way, the outer periphery of the conductor 4, which runs continuously through inside the die, is coated with the foam-insulating layer by the foam extrusion process, and an aimed product or a foam-insulated electric cable 6 is obtained.

A foaming agent used in the foam extrusion coating process is chlorofluorocarbon (known as "Flon", nitrogen, carbon dioxide, propane, or butane, which is a gas at a room temperature and under normal pressure and does not react with polyolefin resin, or an organic solvent having a lower boiling point, such as n-pentane, n-hexane, methanol or ethanol. In particular, Flon has widely been used because of easiness of handling and being highly effective as foaming agent.

Of the above foaming agents, the gas agent is supplied in a predetermined amount into the foaming agent inlet 5 by using a gas flowmeter or a gas pressure regulator. An organic solvent having a lower boiling point is also supplied into the inlet 5 by using a liquid injection pump or the like. In the case of a gas which is a gas at a room temperature and under normal pressure, like Flon, but has a lower vapor pressure, such a gas is once pressurized under a relatively low pressure to be liquefied and then supplied.

Flon, which has been dominantly employed as foaming agent, depletes the ozone layer. It is thus planned that the use of specified Flon having a high ozone depletion potential will be phased out by the year of 2000 and the use of other kinds of Flon will be totally phased out in near future.

Against this background, in the field of production of foamed polyolefin shaped body, the development of a pollution-free foaming agent substituted for Flon is strongly required.

On the other hand, of the foam-insulated cables, the foaming degree of the cable for high-speed signal transmission has been increased more and more, and a diameter of this cable has been decreased more and more.

However, the more the void content of the foam insulating layer coated on the conductor is increased and the more the overall thickness of the foam insulating layer is decreased, the more the toughness of the insulating layer is lowered. Thus, the foam insulating layer may be collapsed and the conductor may be exposed owing to the force applied when the terminal of the cable is processed during wiring work, or the insulating layer may be collapsed by external pressure, causing a disadvantage in that electrical characteristics of the cable, such as velosity of propagation(vop), characteristic impedance, and capacitance, tend to shift.

In addition, the smaller the diameter of the cable, the smaller the quantity of the foaming agent supplied in the foaming process. In this case, it is necessary to exactly control the quantity of the supplied foaming agent.

EP 0 493 110 A2

If the quantity of supplied foaming agent were uneven, the thickness of the shaped foam insulating layer and the electrical characteristics of the cable would also become unstable.

In the meantime, it is very difficult to exactly supply a small amount of the aforementioned gas by finely controlling the quantity of the gas by means of a flowmeter or the like. If the gas is liquefied, it becomes possible to exactly supply the small amount of the gas, but the liquefying process requires condition of very high pressure or very low temperature. This is not industrially advantageous from the viewpoint of safety and economy.

It appears that, as a foaming agent substitutable for Flon, the aforementioned organic solvent having a lower boiling point is suitable, and it can exactly be supplied in a small quantity.

However, in the case where a shaped body with a high void content is produced by using the low organic solvent having a lower boiling point, if the void content is raised, the toughness of the shaped body decreases accordingly and the deformation factor at normal temperature increases.

## OBJECTS AND SUMMARY OF THE INVENTION

An object of the present invention is to provide a method of producing a foamed polyolefin shaped body without a possible decrease toughness even if the void content thereof is increased, and a method of producing a foam-insulated electric cable having a foam insulating layer made of the shaped body.

Another object of the invention is to provide a method of producing, without using Flon, a foam-insulated electric cable having a foam insulating layer with a high void content and a reduced diameter, wherein a pollution-free liquid compound is employed as a foaming agent and the amount of the foaming agent to be supplied is controlled exactly.

In order to achieve the above objects, there are provided a method of producing a foamed polyolefin shaped body, comprising the steps of: supplying a polyolefin resin composition into a resin inlet of a screw extruder; injecting a foaming agent through a portion between the resin inlet and an extrusion port of the extruder; and extruding a molten mixture of the polyolefin resin composition and the foaming agent, wherein the foaming agent is a mixture liquid of at least two kinds of liquid compounds selected from the group consisting of ether, ester, ketone and saturated hydrocarbon having boiling points of 100°C or below, or a mixture liquid of at least one kind of liquid compound selected from the group consisting of ether, ester, ketone and saturated hydrocarbon having boiling points of 100°C or below and at least one kind of liquid compound selected from the group consisting of ether, ester, ketone, saturated hydrocarbon and alcohol having boiling points of 100 to 150°C, and a method of producing a foam-insulated electric cable, comprising the steps of: supplying a polyolefin resin composition into a resin inlet of a screw extruder; injecting a foaming agent through a portion between the resin inlet and an extrusion port of the extruder; and extruding a molten mixture of the polyolefin resin composition and the foaming agent and coating the outer periphery of a conductor with the molten mixture, wherein the foaming agent is a mixture liquid of at least two kinds of liquid compounds selected from the group consisting of ether, ester, ketone and saturated hydrocarbon having boiling points of 100°C or below, or a mixture liquid of at least one kind of liquid compound selected from the group consisting of ether, ester, ketone and saturated hydrocarbon having boiling points of 100°C or below and at least one kind of liquid compound selected from the group consisting of ether, ester, ketone, saturated hydrocarbon and alcohol having boiling points of 100 to 150°C.

## BRIEF DESCRIPTION OF THE DRAWING

Fig. 1 is a schematic view showing an example of an apparatus for producing a foam-insulated cable.

## DETAILED DESCRIPTION OF THE INVENTION

Polyolefin resins employed in the present invention include, for example, polyethylene such as a low density polyethylene, intermediate density polyethylene, high density polyethylene or linear low density polyethylene; polypropylene; and a copolymer of polyolefin such as ethylene-acrylic acid copolymer, ethylene-methacrylate copolymer, ethylene-ethylacrylate copolymer, ethylene-vinyl acetate copolymer or ethylene-propylene copolymer. These resins may be employed singly or in a mixture of at least two kinds.

The method of the present invention is characterized by the foaming agent employed. The foaming agent is a mixture liquid of at least two kinds of organic compounds. These organic compounds are selected from specific groups and have boiling points within a specific range. The foaming agents are generally classified into the following two groups:

The first foaming agent is a mixture liquid of at least two kinds of liquid compounds selected from the group (Group I) consisting of ether, ester, ketone and saturated hydrocarbon having boiling points of 100°C or below.

3

The second foaming agent is a mixture liquid of at least one kind of liquid compound selected from Group I, and at least one kind of liquid compound selected from the group (hereinafter, it is called as Group II) consisting of ether, ester, ketone, saturated hydrocarbon and alcohol having boiling points of 100 to 150°C.

It is desirable that the liquid compounds selected from Group I have boiling points of 80°C or below, and in particular one of the selected liquid compounds have a boiling point of 40°C or below.

Regarding the mixture liquid of the second foaming agent, if any one of the liquid compounds of Group II, which is mixed with at least one liquid compound of Group I, has a boiling point higher than 150°C, the void content of the produced foam shaped body does not increase. In addition, if alcohol having a boiling point lower than 100°C is employed, the deformation ratio of the produced foam shaped body increases.

It is desirable that the liquid compound selected from Group II have a boiling point of 100 to 120°C.

The reason why the first foaming agent is prepared by mixing at least two liquid compounds of Group I and the second foaming agent is prepared by mixing at least one liquid compound selected from Group I and at least one liquid compound selected from Group II will now be stated. If the first and second foaming agents are prepared in this manner, the deformation ratio of the produced foam shaped body is lower than in the case where each liquid compound is singly employed as foaming agent, even though the void content is equal. The reason why this advantage is obtained is not certain; however, it appears that, by using together liquid compounds having different gasification conditions, cells with different cell diameters are mixed in the obtained foam shaped body and the deformation ratio can be reduced while the high void content is attained.

As the liquid compound of ether of Group I, employed is one or two or more of diethyl ether (boiling point: 34.5°C), vinyl ethyl ether (boiling point: 35.7°C), di-isopropyl ether (boiling point: 68.5°C), di-n-propyl ether (boiling point: 90.6°C) and vinyl butyl ether (boiling point: 94.3°C).

In particular, diethyl ether is desirable.

As ester of Group I, employed is one or two or more of methyl formate (boiling point: 32.0°C), ethyl formate (boiling point: 54.1°C), methyl acetate (boiling point: 56.3°C), ethyl acetate (boiling point: 76.8°C), methyl propionate (boiling point: 79.7°C), n-propyl formate (boiling point: 81.5°C), isopropyl acetate (boiling point: 89.5°C), isobutyl formate (boiling point: 97.7°C), and ethyl propionate (boiling point: 99.1°C).

As ketone of Group I, either or both of acetone (boiling point: 56.1°C) and methyl ethyl ketone (boiling point: 79.5°C) are employed.

As saturated hydrocarbon of Group I, employed is one or two or more of i-pentane (boiling point: 27.9°C), n-pentane (boiling point: 36.1°C), cyclopentane (boiling point: 49.3°C), i-hexane (boiling point: 60.3°C), 3-methyl pentane (boiling point: 64.0°C), n-hexane (boiling point: 68.7°C), cyclohexane (boiling point: 80.7°C), and n-heptane (boiling point: 98.4°C).

Of the above-described liquid compounds of Group I, when diethyl ether, methyl formate, ethyl formate, methyl acetate, ethyl acetate, acetone, methyl ethyl ketone, n-pentane and n-hexane are employed, a shaped foam having a small cell diameter, high cell population, and high void content can be obtained. The use of these liquid compounds is also advantageous in terms of cost.

As the liquid compound of ether of Group II, employed is one or two or more of ethylene glycol monomethyl ether (boiling point: 124.5°C), ethylene glycol monoethyl ether (boiling point: 134.8°C) and di-n-butyl ether (boiling point: 142.4°C).

As ester, employed is one or two or more of n-propyl acetate (boiling point: 101.6°C), n-butyl formate (boiling point: 106.8°C), isobutyl acetate (boiling point: 112.2°C), isopentyl formate (boiling point: 124.0°C), n-butyl acetate (boiling point: 126.3°C) and n-butyl propionate (boiling point: 146.8°C).

As ketone, one or two or more of 2-pentanone (boiling point: 101.0°C), 3-pentanone (boiling point 101.5°C), 4-methyl-2-pentanone (boiling point: 115.9°C), 3-hexanone (boiling point: 125.0°C), 2-hexanone (boiling point: 127.2°C), 4-heptanone (boiling point: 144.0°C) and 3-heptanone (boiling point: 145.0°C).

As saturated hydrocarbon, employed is n-octane (boiling point: 125.6°C).

As alcohol, employed is one or two or more of 3-pentanol (boiling point: 115.6°C), 1-butanol (boiling point: 117.7°C), 2-pentanol (boiling point: 119.3°C), 3-hexanol (boiling point: 134.5°C), 1-pentanol (boiling point: 137.5°C) and 2-hexanol (boiling point 139.8°C).

When preparing the first foaming agent, one or two or more kinds may be selected from the same group ("ether group", "ester group", etc.) and mixed, or one or two or more kinds may be selected from different groups and mixed. When the second foaming agent is prepared, at least one kind of liquid compound selected from Group I is mixed with one or two or more kinds selected from the same group in Group II, or mixed with one or two or more kinds selected from different groups in Group II.

The combination of compounds may be determined on the basis of the required void content and deformation ratio of foamed polyolefin shaped bodies to be produced.

For example, when a foam shaped body is employed as a core of a high-speed signal transmission cable, a collapsing force is exerted on the core in the steps of extruding a skin layer or a sheath and carrying out wrapping of wires, tape wrapping and final twist. Thus, the foaming agent for the core may be prepared based on an ether-based combination of the above organic compounds so as to reduce a its deformation ratio at a room temperature and increase toughness.

In the case of an under-carpet cable or a cable bent in a narrow space, which requires a higher toughness than the high-speed signal transmission cable, it is desirable to prepare the foaming agent on the basis of an ester-based combination of organic compounds.

The mixing ratio of the liquid compounds of the first foaming agent is not limited; however, for example, when two liquid compounds are mixed, a desirable mole ratio is 1 : 9 to 9 : 1. More desirably, it is 1 : 2 to 2 : 1.

The first foaming agent is desirable to be a mixture liquid containing at least diethyl ether and methyl acetate, a mixture liquid containing at least diethyl ether and ethyl acetate, or a mixture liquid containing at least methyl acetate and ethyl acetate. Of these, the mixture liquid of diethyl ether and methyl acetate with a mole ratio of 2 : 1 to 1 : 2 is most desirable.

The second foaming agent is prepared by mixing at least one kind of liquid compound of Group I described in connection with the first foaming agent, and at least one kind of liquid compound of Group II. The use of the liquid compound of Group II reduces the deformation ratio of the obtained foam shaped body and increases the toughness of the body, but, in this case, the void content is not remarkably increased.

It is thus desirable that the mixing ratio of the liquid compound of Group I to the liquid compound of Group II be determined such that the number of moles of the former, when used, is greater than that of the latter. Specifically, a desirable mole ratio of the former to the latter is 5 : 5 to 9 : 1.

In the method of the present invention, when the polyolefin resin is melted, kneaded and extruded by the extruder, it suffices to inject a predetermined amount of the first foaming agent or the second foaming agent in the foaming agent inlet formed between the resin inlet and the extrusion port.

At this time, a thermal decomposition foaming agent capable of generating nitrogen gas or carbon dioxide gas by thermal decomposition may be employed along with the above foaming agent. If necessary, the polyolefin resin to be melted and kneaded may be mixed with a foaming nuclear agent, an anti oxidant, a pigment, or a cross-linking accelerator.

Examples and Controls

A resin composition prepared by mixing 100 parts by weight of low density polyethylene (melt index: 1.0 g/10 min.) with 1.0 part by weight of talc (foaming nuclear agent) was injected in the resin inlet 2 of the screw extruder 1 (diameter: 30 mm) shown in Fig. 1. Foaming agents shown in Tables 1 to 4 were injected in the foaming agent inlet 5 and melted and kneaded. The resulting molten mixture was extruded from the extrusion port 1b into the crosshead portion 3. The mixture was coated on an anealed copper wire element (diameter: 0.32 mm) running continuously through the crosshead portion 3. Thus, the foam-insulated electric cables having an outside diameter of about 1.0 mm in the finished state were produced.

The void content and normal temperature deformation ratio of the foam insulating layer of each electric cable were measured under the conditions stated below, and the measurement results were shown in Tables 1 to 4.

The void content (%): a maximum void content measured when the injection amount of the foaming agent of each example and the set temperature in the melting and kneading steps were variously changed.

The normal temperature deformation ratio (%): this ratio was measured under the conditions that the heating temperature was 23°C, the load was 500 g and the loading time was 15 minutes, in a heating deformation test stipulated in JISC 3005, item 25.

TABLE 1

| | FORMING AGENTS (LIQUIDS) | | | | | | | CHARACTERISTICS OF SHAPED BODIES | |
| | KIND (A) | BOILING POINT (°C) | GROUP | KIND (B) | BOILING POINT (°C) | GROUP | MIXING RATIO (Molar Ratio : A/B) | VOID CONTENT (%) | NORMAL TEMPERATURE DEFORMATION RATIO (%) |
|---|---|---|---|---|---|---|---|---|---|
| Example 1 | methyl acetate | 5 6. 3 | I | acetone | 5 6. 1 | I | 1 | 6 2 | 5 |
| Example 2 | methyl acetate | 5 6. 3 | I | methyl ethyl ketone | 7 9. 5 | I | 1 | 5 7 | 3 |
| Example 3 | methyl acetate | 5 6. 3 | I | n-pentane | 3 6. 1 | I | 1 | 6 3 | 4 |
| Example 4 | methyl acetate | 5 6. 3 | I | n-hexane | 6 8. 7 | I | 1 | 5 2 | 2 |
| Example 5 | ethyl acetate | 7 6. 8 | I | acetone | 5 6. 1 | I | 1 | 5 5 | 4 |
| Example 6 | methyl formate | 3 2. 0 | I | acetone | 5 6. 1 | I | 1 | 6 3 | 5 |
| Example 7 | ethyl formate | 5 4. 1 | I | acetone | 5 6. 1 | I | 1 | 5 9 | 4 |
| Example 8 | methyl acetate | 5 6. 3 | I | ethyl acetate | 7 6. 8 | I | 1 | 5 8 | 4 |
| Example 9 | methyl acetate | 5 6. 3 | I | methyl formate | 3 2. 0 | I | 1 | 6 0 | 4 |
| Example 10 | ethyl acetate | 7 6. 8 | I | ethyl formate | 5 4. 1 | I | 1 | 5 7 | 3 |
| Example 11 | diethyl ether | 3 4. 5 | I | methyl acetate | 5 6. 3 | I | 1 | 6 9 | 8 |
| Example 12 | diethyl ether | 3 4. 5 | I | ethyl acetate | 7 6. 8 | I | 1 | 6 6 | 6 |
| Example 13 | diethyl ether | 3 4. 5 | I | methyl formate | 3 2. 0 | I | 1 | 7 1 | 9 |
| Example 14 | diethyl ether | 3 4. 5 | I | ethyl formate | 5 4. 1 | I | 1 | 6 7 | 8 |
| Example 15 | diethyl ether | 3 4. 5 | I | acetone | 5 6. 1 | I | 1 | 7 1 | 8 |
| Example 16 | diethyl ether | 3 4. 5 | I | n-pentane | 3 6. 1 | I | 1 | 6 6 | 7 |
| Example 17 | diethyl ether | 3 4. 5 | I | i-pentane | 2 7. 9 | I | 1 | 6 8 | 9 |

TABLE 2

| | FORMING AGENTS (LIQUIDS) | | | | | | | CHARACTERISTICS OF SHAPED BODIES | |
| | KIND (A) | BOILING POINT (°C) | GROUP | KIND (B) | BOILING POINT (°C) | GROUP | MIXING RATIO (Molar Ratio : A/B) | VOID CONTENT (%) | NORMAL TEMPERATURE DEFORMATION RATIO (%) |
|---|---|---|---|---|---|---|---|---|---|
| Example 18 | diethyl ether | 34.5 | I | vinyl ethyl ether | 35.7 | I | 1 | 7 2 | 7 |
| Example 19 | diethyl ether | 34.5 | I | methyl ethyl ketone | 79.5 | I | 1 | 5 7 | 9 |
| Example 20 | diethyl ether | 34.5 | I | n-hexane | 68.7 | I | 1 | 5 4 | 6 |
| Example 21 | methyl acetate | 56.3 | I | di-n-butyl ether | 142.4 | II | 2 | 5 1 | 5 |
| Example 22 | methyl acetate | 56.3 | I | n-butyl acetate | 126.3 | II | 2 | 5 7 | 8 |
| Example 23 | methyl acetate | 56.3 | I | 2-hexanone | 127.2 | II | 2 | 5 5 | 7 |
| Example 24 | methyl acetate | 56.3 | I | n-octane | 125.6 | II | 2 | 5 5 | 6 |
| Example 25 | methyl acetate | 56.3 | I | 1-butanol | 117.7 | II | 2 | 6 0 | 9 |
| Example 26 | diethyl ether | 34.5 | I | di-n-butyl ether | 142.4 | II | 2 | 5 3 | 6 |
| Example 27 | diethyl ether | 34.5 | I | n bnutyl acetate | 126.3 | II | 2 | 6 1 | 9 |
| Example 28 | diethyl ether | 34.5 | I | 2-hexanone | 127.2 | II | 2 | 5 8 | 7 |
| Example 29 | diethyl ether | 34.5 | I | n-octane | 125.6 | II | 2 | 5 7 | 8 |
| Example 30 | diethyl ether | 34.5 | I | 1-butanol | 117.7 | II | 2 | 6 5 | 1 0 |
| Example 31 | acetone | 56.1 | I | 1-butanol | 117.7 | II | 2 | 6 2 | 9 |
| Example 32 | n-hexane | 68.7 | I | 1-butanol | 117.7 | II | 2 | 5 7 | 8 |
| Example 33 | ethyl acetate | 76.8 | I | 1-butanol | 117.7 | II | 2 | 5 5 | 5 |
| Example 34 | di-i-propyl ether | 68.5 | I | 1-butanol | 117.7 | II | 2 | 5 7 | 6 |

EP 0 493 110 A2

TABLE 3

| | FORMING AGENTS (LIQUIDS) | | | | | | | CHARACTERISTICS OF SHAPED BODIES | |
|---|---|---|---|---|---|---|---|---|---|
| | KIND (A) | BOILING POINT (°C) | GROUP | KIND (B) | BOILING POINT (°C) | GROUP | MIXING RATIO (Molar Ratio : A/B) | VOID CONTENT (%) | NORMAL TEMPERATURE DEFORMATION RATIO (%) |
| Control 1 | n-butyl acetate | 126.3 | II | di-n-butyl ether | 142.4 | II | 1 | 5 | 1 |
| Control 2 | n-butyl acetate | 126.3 | II | n-propyl acetate | 101.6 | II | 1 | 3 5 | 3 |
| Control 3 | n-butyl acetate | 126.3 | II | 3-pentane | 101.5 | II | 1 | 3 2 | 3 |
| Control 4 | n-butyl acetate | 126.3 | II | n-octane | 125.6 | II | 1 | 7 | 1 |
| Control 5 | n-butyl acetate | 126.3 | II | 1-butanol | 117.7 | II | 1 | 1 6 | 1 |
| Control 6 | methanol | 6 4.7 | I | di-n-butyl ether | 142.4 | II | 1 | 5 1 | 1 3 |
| Control 7 | methanol | 6 4.7 | I | n-propyl acetate | 101.6 | II | 1 | 6 0 | 1 4 |
| Control 8 | methanol | 6 4.7 | I | 3-pentane | 101.5 | II | 1 | 6 0 | 1 4 |
| Control 9 | methanol | 6 4.7 | I | n-octane | 125.6 | II | 1 | 5 5 | 1 4 |
| Control 10 | methanol | 6 4.7 | I | 1-butanol | 117.7 | II | 1 | 5 2 | 1 3 |
| Control 11 | methanol | 6 4.7 | I | diethyl ether | 3 4.5 | I | 1 | 7 2 | 1 7 |
| Control 12 | methanol | 6 4.7 | I | methyl acetate | 5 6.3 | I | 1 | 6 8 | 1 5 |
| Control 13 | methanol | 6 4.7 | I | acetone | 5 6.1 | I | 1 | 7 0 | 1 8 |
| Control 14 | methanol | 6 4.7 | I | n-hexane | 6 8.7 | I | 1 | 6 0 | 1 3 |
| Control 15 | methanol | 6 4.7 | I | ethanol | 7 8.3 | I | 1 | 7 0 | 1 6 |

TABLE 4

| | FORMING AGENTS (LIQUIDS) | | | | | | | CHARACTERISTICS OF SHAPED BODIES | |
|---|---|---|---|---|---|---|---|---|---|
| | KIND (A) | BOILING POINT (°C) | GROUP | KIND (B) | BOILING POINT (°C) | GROUP | MIXING RATIO (Molar Ratio : A/B) | VOID CONTENT (%) | NORMAL TEMPERATURE DEFORMATION RATIO (%) |
| Control 16 | methyl acetate | 56.3 | I | di-n-hexyl ether | 226.2 | — | 2 | 5 | 0 |
| Control 17 | methyl acetate | 56.3 | I | n-hexyl acetate | 171.5 | — | 2 | 10 | 1 |
| Control 18 | methyl acetate | 56.3 | I | 2-aotanone | 173.5 | — | 2 | 9 | 1 |
| Control 19 | methyl acetate | 56.3 | I | n-decane | 174.1 | — | 2 | 9 | 1 |
| Control 20 | methyl acetate | 56.3 | I | 1-hexanol | 157.9 | — | 2 | 13 | 1 |
| Control 21 | diethyl ether | 34.5 | I | —— | — | — | — | 68 | 17 |
| Control 22 | methyl acetate | 56.3 | I | —— | — | — | — | 67 | 17 |
| Control 23 | acetone | 56.1 | I | —— | — | — | — | 68 | 19 |
| Control 24 | n-pentane | 36.1 | I | —— | — | — | — | 70 | 20 |
| Control 25 | methanol | 64.7 | I | —— | — | — | — | 64 | 20 |
| Control 26 | di-n-butyl ether | 142.4 | II | —— | — | — | — | 0 | 1 |
| Control 27 | n-propyl acetate | 101.6 | II | —— | — | — | — | 0 | 2 |
| Control 28 | 3-pentane | 101.5 | II | —— | — | — | — | 5 | 1 |
| Control 29 | n-octane | 125.6 | II | —— | — | — | — | 3 | 2 |
| Control 30 | 1-butanol | 117.7 | II | —— | — | — | — | 7 | 4 |

As is clear from the data on the tables, when the foaming agents of Controls 1 to 5, wherein the boiling points of all liquid compounds were 100°C or more, and the foaming agents of Controls 16 to 20, wherein the boiling point of either one of the liquid compounds was 100°C or more, were employed, the void contents of the obtained shaped foams were low.

In the case of Controls 6 to 15 wherein alcohols having boiling points of 100°C or below, the void contents of the obtained foams were high but the normal temperature deformation ratios thereof were remarkably low.

In addition, when only one kind of liquid compound was employed, as in Controls 21 to 25, the void contents were high but the normal temperature deformation ratio were low, or, as in Controls 26 to 30, the normal temperature deformation ratios were high but the void contents were remarkably low.

As has been stated above, only when the foaming agent of the present invention was employed, the foam having both high void content and low normal temperature deformation ratio was obtained.

As is obvious from the above description, according to the method of the present invention, a foamed polyolefin shaped body having a high void content, a low normal temperature deformation ratio and a high toughness strength can be produced without using Flon, and a foam-insulated electric cable having the shaped body as an insulating layer can be produced.

Since any of the foaming agents employed is a pollution-free liquid, the quantity of the supplied foaming agent can be exactly controlled, and this invention is effective in producing a foam-insulated electric cable whose diameter is reduced with a high void content.

## Claims

1. A method of producing a foamed polyolefin, comprising the steps of:
   supplying a polyolefin resin composition through a resin inlet of a screw extruder;
   injecting a foaming agent through a portion between the resin inlet and an extrusion port of the extruder; and
   extruding a molten mixture of the polyolefin resin composition and the foaming agent,
   wherein the foaming agent is a mixture liquid of at least two kinds of liquid compounds selected from the group consisting of ether, ester, ketone and saturated hydrocarbon having boiling points of 100°C or below, or a mixture liquid of at least one kind of liquid compound selected from the group consisting of ether, ester, ketone and saturated hydrocarbon having boiling points of 100°C or below and at least one kind of liquid compound selected from the group consisting of ether, ester, ketone, saturated hydrocarbon and alcohol having boiling points of 100 to 150°C.

2. A method of producing a foam-insulated electric cable, comprising the steps of:
   supplying a polyolefin resin composition into a resin inlet of a screw extruder;
   injecting a foaming agent through a portion between the resin inlet and an extrusion port of the extruder; and
   extruding a molten mixture of the polyolefin resin composition and the foaming agent, and coating the outer periphery of a conductor with the molten mixture,
   wherein the foaming agent is a mixture liquid of at least two kinds of liquid compounds selected from the group consisting of ether, ester, ketone and saturated hydrocarbon having boiling points of 100°C or below, or a mixture liquid of at least one kind of liquid compound selected from the group consisting of ether, ester, ketone and saturated hydrocarbon having boiling points of 100°C or below and at least one kind of liquid compound selected from the group consisting of ether, ester, ketone, saturated hydrocarbon and alcohol having boiling points of 100 to 150°C.

3. The method according to claim 2, wherein said at least one kind of compound selected from the group consisting of ether, ester, ketone and saturated hydrocarbon has a boiling point of 40°C or below.

4. The method according to claim 3, wherein said compound is diethyl ether.

5. The method according to claim 2, wherein the number of moles of said at least one kind of compound selected from the group consisting of ether, ester, ketone and saturated hydrocarbon having boiling points of 100°C or below is greater than the number of moles of said at least one kind of compound selected from the group consisting of ether, ester, ketone, saturated hydrocarbon and alcohol having boiling points of 100 to 150°C.

6. The method according to claim 2, wherein said foaming agent is a mixture liquid containing at least diethyl ether and methyl acetate.

7. The method according to claim 2, wherein said foaming agent is a mixture liquid containing at least diethyl ether and ethyl acetate.

8. The method according to claim 2, wherein said foaming agent is a mixture liquid containing at least methyl acetate and ethyl acetate.

9. The method according to claim 2, wherein said foaming agent is a mixture liquid of diethyl ether and methyl ester acetate, with the molar ratio of the former to the latter being 2 : 1 to 1 : 2.

F I G. 1